# EUROPÄISCHE PATENTSCHRIFT

(11) **EP 3 157 706 B1**
(45) Veröffentlichungstag und Bekanntmachung des Hinweises auf die Patenterteilung: **13.09.2017**
(21) Anmeldenummer: 15747428.9
(22) Anmeldetag: 30.07.2015
(51) Int. Cl.: B23K 26/06, B23K 26/24, B23K 26/70, B23K 26/082, B23K 26/044

(54) **VERFAHREN ZUM LASERSTRAHLSCHWEISSEN VON MINDESTENS ZWEI FÜGEPARTNERN MITTELS OPTISCHER NAHTFÜHRUNG UND EINER SCANNEREINRICHTUNG MIT ÜBERLAGERTER SCHWINGUNGSSPIEGELOSZILLATION**
METHOD FOR THE LASER BEAM WELDING OF AT LEAST TWO PARTS TO BE JOINED BY MEANS OF OPTICAL SEAM TRACKING AND A SCANNER DEVICE HAVING SUPERIMPOSED OSCILLATING MIRROR OSCILLATION
PROCÉDÉ DE SOUDAGE PAR FAISCEAU LASER DE DEUX ÉLÉMENTS DE JONCTION ASSOCIÉS OU PLUS AU MOYEN D'UN GUIDAGE OPTIQUE DE JOINT DE SOUDURE ET D'UN DISPOSITIF DE BALAYAGE AVEC OSCILLATION SUPERPOSÉE DE MIROIRS OSCILLANTS

(30) Priorität: 10.10.2014 DE 102014015094
(43) Veröffentlichungstag der Anmeldung: 26.04.2017
(73) Patentinhaber: Audi AG, 85045 Ingolstadt (DE)
(72) Erfinder: WEBERPALS, Dr.-Ing. Jan-Philipp, 74232 Abstatt (DE); BÖHM, Daniel, 74239 Hardthausen (DE); VOGT, Peter, 74196 Neuenstadt (DE); KAISER, Tobias, 74074 Heilbronn (DE)
(86) Internationale Anmeldenummer: PCT/EP2015/067578
(87) Internationale Veröffentlichungsnummer: WO 2016/055184

(56) Entgegenhaltungen:
- DE-A1- 4 306 090
- DE-A1- 10 335 501
- JP-A- H1 119 787
- US-A- 4 924 063

## Beschreibung

Die Erfindung betrifft ein Verfahren zum Laserstrahlschweißen von mindestens zwei Fügepartnern nach dem Oberbegriff des Anspruchs 1.

Bei einem bekannten gattungsgemäßen Verfahren zum Laserschweißen von mindestens zwei Fügepartnern (DE 103 35 501 A1) wird eine optische Nahtführung verwendet, bei der der Laserstrahl durch eine Scannereinrichtung als Laserstrahlleitvorrichtung mit wenigstens einem gesteuert beweglichen Schwingspiegel eine optisch detektierte Führungskante entsprechend einem Soll-Schweißnahtverlauf abfährt. Für die optische Detektion der Fügungskante wird ein Mess-Laserstrahl verwendet und für den Schweißprozess ein Schweiß-Laserstrahl entsprechend geführt. Weiter sind hier teildurchlässige Einkoppelspiegel im Strahlengang verwendet.

Ein Steuerungseingriff, insbesondere während des Schweißprozesses für eine flexible an bauteilgeometrische und/oder prozessuale Bedingungen angepasste Schweißnahtformgestaltung ist mit dem gattungsgemäßen Verfahren nicht oder nur langsam möglich.

Bei einem weiter bekannten ähnlichen Verfahren zum Laserstrahlschweißen (DE 10 2008 033 113 A1) wird ebenfalls eine optische Nahtführung mit einer optoelektronischen Abtasteinrichtung und einer auf beweglichen Spiegeln basierenden Laserstrahlablenkeinrichtung verwendet.

Aufgabe der Erfindung ist es daher, ein gattungsmäßiges Verfahren zum Laserstrahlschweißen von mindestens zwei Fügepartnern mittels optischer Nahtführung so weiter zu bilden, dass größere Freiräume für eine flexible Schweißnahtformgestaltung, insbesondere als Querschnittformgestaltung möglich sind.

Die Aufgabe ist durch die Merkmale des Patentanspruches 1 gelöst. Bevorzugte Weiterentwicklungen der Erfindung sind in den Unteransprüchen offenbart.

Durch die erfindungsgemäße Überlagerung der Schwingspiegeloszillation wird der Laserauftreffpunkt bezüglich der herkömmlichen relativ langsamen Führung entlang der Schweißnahtspur schnell mit einer überlagerten Bewegung räumlich/örtlich ausgelenkt. Dadurch ist eine gezielte und gegebenenfalls sehr schnelle Manipulation der Materialaufschmelzung und der Materialerstarrung im Schweißnahverlauf möglich, wodurch eine flexible Schweißnahtformgestaltung in Abhängigkeit der Stoßgeometrie der Fügepartner durchführbar ist. Insbesondere lassen sich gegebenenfalls variable Spaltmaße im Fügebereich überbrücken sowie die Schweißnahtspur in der Breite und Einschweißtiefe in der Bauteilpaarung einstellen und steuern. Eine solche vorteilhafte Manipulation durch eine hochfrequente Oszillationsbewegung wird insbesondere in einem Frequenzbereich vom 0 Hz bis 20 kHz, vorzugsweise in einem Frequenzbereich von 0 Hz bis 5 kHz durchführbar, wobei der Vortrieb der Schweißnahtspur in einem Bereich von 1 mm/sec bis 425 mm/sec.

Anstelle eines gesteuert bewegten Schwingspiegels mit überlagerter hochfrequenter Oszillation können je nach den Gegebenheiten auch mehrere Schwingspiegel verwendet werden: Dabei können alle verwendeten Schwingspiegel mit einer der Nahtführung überlagerten Oszillation gesteuert werden. Alternativ können jedoch ein oder mehrere Schwingspiegel für die herkömmliche Nahtführung ohne überlagerte Oszillation eingesetzt werden, in Kombination mit einem oder mehreren Schwingspiegeln für eine überlagerte Oszillation des Laserstrahls. Diese Alternative ermöglicht weitere Freiräume in der Manipulation der Schweißnahtformgestaltung: Beispielsweise können der oder die Schwingspiegel ohne Oszillation für eine Laserstrahlrichtung auf einen mittleren Bereich der Schweißnahspur verwendet werden, um dort einen relativ hohen Aufschmelzgrad zu erhalten, sodass bei den oszillierenden Schwingspiegeln an lateralen Umkehrpunkten des Laserstrahls in der Schweißnahtspur durch relativ lange Verweildauern keine ungünstig hohe Aufschmelzung erfolgt.

Die optische Kantendetektion für die optische Nahtführung wird gemäß der Erfindung in an sich bekannter Weise mittels einer Laserlinie und Lasertriangulation durchgeführt, wobei die Laserlinie unmittelbar vor der Wechselwirkungszone zwischen Laserstrahl und Bauteil auf die Oberfläche projiziert wird.

Konkret soll somit die der optischen Nahtführung überlagerte Schwingspiegeloszillation so durch Schwingspiegelverschwenkungen gesteuert werden, dass der in der Wechselwirkungszone gesteuert gelenkte Laserstrahl-Auftreffpunkt zusätzlich und in Kombination mit der herkömmlichen optischen Nahtführung entlang der Bewegung des Soll-Schweißnahtverlaufs mit einer räumlichen Schwingspiegeloszillation durch eine Schwenkbewegung um eine Achse eine überlagerte oszillierende Transversalbewegung ausführt und/oder eine überlagerte oszillierende Taumelbewegung, insbesondere eine oszillierende Kreisbewegung ausführt. Je nach der gesteuert möglichen Schwingspiegelbewegung ergeben sich vorteilhafte Manipulationsmöglichkeiten für die Schweißnahtformgestaltung.

In einer weiteren Ausgestaltung des Verfahrens kann vorteilhaft der Schweißprozess dadurch gezielt beeinflusst werden, dass durch eine zeitliche Modulation der räumlichen Oszillationsbewegung die Aufenthaltszeit des Laserstrahlauftreffpunkts entlang seiner Bewegungskurve beeinflusst wird. Vorteilhaft kann damit die Aufenthaltszeit des Laserstrahl-Auftreffpunkts im gesamten Bewegungskurvenverlauf, insbesondere an lateralen Umkehrpunkten vergleichmäßigt werden, um dort eine ungünstige und unerwünschte Bearbeitungstiefe zu vermeiden. Wenn beispielsweise bei einer überlagerten oszillierenden Transversalbewegung des Schwingspiegels der Bewegungskurvenverlauf des Laserauftreffpunkts entlang der Schweißspur sinusförmig entsprechend einer Transversalwelle verläuft ist ersichtlich die Aufenthaltsdauer des Laserauftreffpunkts an den lateralen Umkehrpunkten bei einer gleichmäßigen Oszillationsbewegung relativ lang. Durch die vorstehende zeitliche Modulation kann die Bewegungsgeschwindigkeit an den lateralen Umkehrpunktbereichen vergrößert werden, sodass damit eine ungünstig lange Aufenthaltsdauer reduziert wird. Eine weitere gegebenenfalls vorteilhafte Einflussnahme auf die Schweißnaht von Gestaltung kann dadurch erreicht werden, dass zusammen mit der räumlichen Schwingspiegeloszillation gegebenenfalls mit einer korrelierten zeitlichen Modulation noch eine entsprechend korrelierte Laserleistungsmodulation erfolgt. Diese Laserleistungsmodulation kann durch einen entsprechenden Steuereingriff unmittelbar an der Laserstrahlerzeugungseinrichtung durchgeführt werden. Beispielsweise kann auch damit alternativ oder zusätzlich ein zu hoher Leistungseintrag an lateralen Umkehrpunkten entsprechend dem vorstehenden Beispiel verringert werden.

In einer besonders vorteilhaften Weiterbildung des Verfahrens für einen geschlossenen Regelkreis zu einer flexiblen Schweißnahtformgestaltung wird zusätzlich zu den vorstehenden Manipulationseingriffen mit einem Verfahren die Bearbeitungstiefe entsprechend der Aufschmelztiefe bestimmt und als weiterer Parameter in der Regelung berücksichtigt, dergestalt, dass eine optimale Bearbeitungstiefe ohne Durchschmelzen erreicht wird.

Ein besonders geeignetes Verfahren besteht darin, die Bearbeitungstiefe durch eine Auswertung der aus der Wechselwirkungszone zurückreflektierten Laserleistung zu bestimmen.

Anhand einer Zeichnung wird die Erfindung weiter erläutert.

Es zeigen:
- Fig. 1: Eine schematische Darstellung einer Laserstrahlschweißeinrichtung mit optischer Nahtführung,
- Fig. 2: einen Querschnitt durch eine Schweißnaht hergestellt nach dem erfindungsgemäßen Verfahren und
- Fig. 3: einen Querschnitt durch eine Schweißnaht hergestellt mit einer taktilen Nahtführung mit Zusatzdraht.

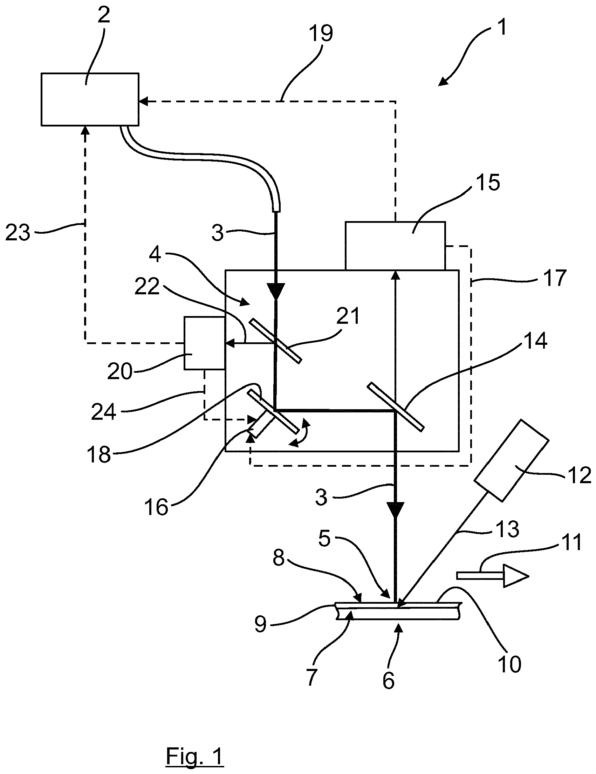

In Fig. 1 ist beispielhaft prinzipiell und schematisch der Aufbau einer Laserstrahlschweißeinrichtung 1 zur Durchführung des erfindungsgemäßen Verfahrens zum Laserschweißen von mindestens zwei Fügepartnern mittels optischer Nahtführung dargestellt. Die Laserstrahlschweißeinrichtung 1 besteht aus einer Laserstrahlerzeugungseinrichtung 2 zur Erzeugung eines Bearbeitungslaserstrahls 3, der einer Scannereinrichtung 4 als Laserlenkvorrichtung zugeführt wird.

Der in der Scannereinrichtung 4 gezielt gelenkte Bearbeitungslaserstrahl 3 wird von der Scannereinrichtung auf eine Wechselwirkungszone 5 zwischen Bearbeitungslaserstrahl 3 und einem Bauteil 6 projiziert. Das Bauteil 6 besteht aus zwei Fügepartnern, nämlich einem unteren Blechteil 7 und einem oberen Blechteil 8, die mit einer Kehlnaht 9 an einem Überlappungsstoß 10 mittels des Bearbeitungslaserstrahls 3 verbunden werden.

Die Prozessrichtung (nach rechts) ist mit einem Pfeil 11 angegeben. Unmittelbar im Vorlauf zur Wechselwirkungszone 5 wird mit einem Linienlaser 12 eine Laserlinie 13 auf den Überlappungsstoß 10 projiziert. Diese Laserlinie 13 wird für eine Lasertriangulation benötigt, wobei bedingt durch die topographische Oberflächenstruktur (Überlappungsstoß für I- oder Kehlnaht, Stumpfstoß für I-Naht, etc.) die Reflexion der Laserlinie 13 koaxial zum Bearbeitungslaserstrahl 3 über einen dichroitischen Spiegel 14 und einen auf die Wellenlänge des Linienlasers 12 abgestimmten Bandpassfilter auf eine Positionserfassungs-Kamera 15 abgebildet wird. Anhand der Topographie der Bauteiloberfläche wird mittels der Lasertriangulation hier beispielsweise die Beschnittkante des oben liegenden Blechteils 8 im Fall einer Kehlnaht als fortlaufendes Erkennungsmerkmal für einen Soll-Schweißnahtverlauf erfasst.

Diese Information wird genutzt und an eine Steuer- und Stelleinheit 16 weitergegeben (schematisch durch strichlierte Linie 17 dargestellt), die mit einem Schwingspiegel 18 zur Lenkung des Bearbeitungslaserstrahls 3 verbunden ist. Entsprechend der Information aus der Positionserfassungs-Kamera 15 wird durch eine zeitlich verzögerte Stellbewegung des Schwingspiegels 18 oder gegebenenfalls mehrerer Schwingspiegel bezüglich dieses Erkennungsmerkmals der Bearbeitungslaserstrahl 3 örtlich präzise positioniert, wobei gegebenenfalls durch eine überlagerte Verstellung des Schwingspiegelsystems Toleranzen bzw. Bahnungenauigkeiten ausgeglichen werden.

Neben der vorstehend geschilderten optischen Nahtführung ist zudem eine räumliche Schwingspiegeloszillation überlagert, womit sich beispielweise Spalten überbrücken lassen sowie der Füllgrad der Kehlnahtverbindung oder gegebenenfalls eine Legierungszusammensetzung bei Mischverbindungen präzise einstellen lassen.

Ebenfalls kann in Folge der kamerabasierten Auswertung die Fügegeometrie durch die Lasertriangulation unmittelbar vor der Wechselwirkungszone 5, wie beispielsweise vermessen von Spaltmaßen, Geometrieänderungen, etc. erfasst werden. Neben der Schwingungsamplitude des Schwingspiegelsystems kann diesbezüglich die Laserleistung für den Bearbeitungslaserstrahl 3 an der Laserstrahlerzeugungseinrichtung 2 eingestellt und variiert werden, bzw. die vorgegebene zeitliche Laserleistungsfunktion korrigiert werden. Für solche Maßnahmen wir die erforderliche Information von der Positionserfassungskamera 15 an die Laserstrahlerzeugungseinrichtung 2 weitergegeben, wie dies schematisch mit der strichlierten Linie 19 eingezeichnet ist.

Die zeitlich verzögerte Stellbewegung des Schwingspiegelsystems aus der Steuer- und Stelleinheit 16 und den Schwingspiegel 18 zu einer exakten Positionierung des Bearbeitungslaserstrahls bezüglich des jeweiligen Erkennungsmerkmals hängt unmittelbar sowohl vom Abstand der Lasertriangulationslinie 13 und der Wechselwirkungszone 5 zwischen dem Bearbeitungslaserstrahl 3 und dem Bauteil 6, als auch der tatsächlichen Prozessgeschwindigkeit (Pfeil 11) ab. Der Zeitpunkt einer notwendigen Stellbewegung des Schwingspiegelsystems 16, 18 lässt sich deutlich präzisieren, in dem die tatsächliche Ist-Geschwindigkeit des TCP (Tool Center Point) zur Berechnung herangezogen wird.

Ferner lässt sich durch eine Erhöhung der Anzahl der parallel verlaufenden Lasertriangulationslinien die absolute Bauteillage im Raum bezüglich der Scannereinrichtung 4 bestimmen. Neben dem Abstand zwischen Bauteil 6 und Scannereinrichtung 4 sowohl einer lateralen Abweichung des Soll-Schweißnahtverlaufs, lassen sich mit mehr als einer Laserlinie 13 neben der lateralen Neigung der Scannereinrichtung 4 auch der Vorlaufwinkel (Schleppwinkel) und der Verdrehwinkel gegenüber einer fluchtenden Bahnführung bestimmen. Diese Informationen können in Kombination mit den Bahntrajektorien der Handling-Maschine der Scannereinrichtung 4 zur Kompensation von kartesischen (Kompensation Z-Lage via motorischer Verstellung) und winkelabhängigen Positionsungenauigkeiten (Kompensation von Schlepp-, Verdreh- und Lateralwinkeln) genutzt, um damit eine exakte Strahlpositionierung für 3D-Bahn-Prozesse zu gewährleisten.

Zudem wird hier ein zusätzliches Verfahren zur Bestimmung der Bearbeitungstiefe eingesetzt, wobei mittels einer Auswerteeinheit 20 die Bearbeitungstiefe durch eine Auswertung der aus der Wechselwirkungszone 5 zurückreflektierten Laserleistung bestimmt wird. Dazu über einen weiteren dichroitischen Spiegel 21 ein Teilstrahl 22 ausgekoppelt und der Auswerteeinheit 20 zugeführt.

Die aktuelle Bearbeitungstiefe wird als Istwertsignal sowohl der Laserstrahlerzeugungseinrichtung 2 (strichlierte Linie 23) als auch der Steuer- und Stelleinheit 16 für den Schwingspiegel 18 (strichlierte Linie 24) zugeführt.

Mit diesem Verfahren zur Bestimmung der Bearbeitungstiefe als direktes Feedback aus der Wechselwirkungszone 5 in Kombination mit den weiteren vorstehend erläuterten Maßnahmen lässt sich der Fügeprozess mittels optischer Nahtführung als geschlossenes Regelungssystem erweitern. Bei diesem gesamtheitlichen Verfahren lässt sich die Bearbeitungstiefe nahezu in Echtzeit erfassen und anhand der Regelung der Laserleistung und/oder der Schwingspiegelbewegung gegebenenfalls automatisch korrigieren. Dadurch lässt sich angepasst auf die geforderten spezifischen Schweißnahteigenschaften eine flexible Schweißnahtform entlang eines fortlaufenden Soll-Schweißnahtverlaufs sicherstellen.

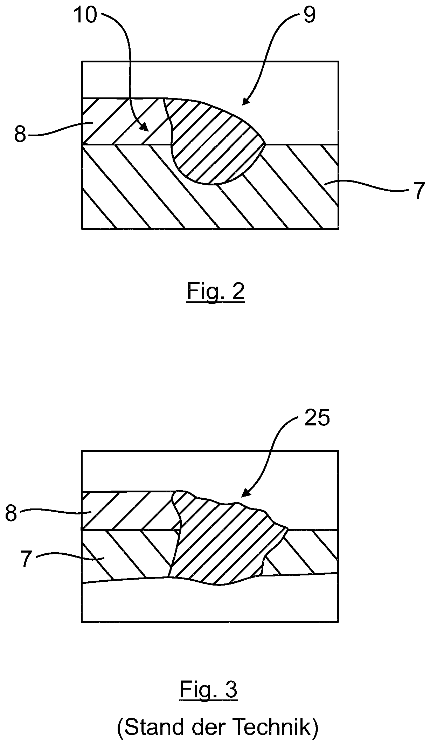

Fig. 2 zeig beispielhaft einen Querschnitt (Querschliff) einer Kehlnaht 9 im Überlappungsstoß 10 der zwei Fügepartner (unteres Blechteil 7, oberes Blechteil 8) wie sie mit den erfindungsgemäßen Maßnahmen und der Laserstrahlschweißeinrichtung 1 herstellbar ist. Dabei wurde die Beschnittkante des oberen Blechteils 8 als fortlaufendes Erkennungsmerkmal für den Soll-Schweißnahtverlauf gewählt. Durch eine überlagerte örtliche sowie zeitliche Laserstrahlmodulation konnte eine konstante Einschweißtiefe bezüglich der Oberseite des unteren Blechteils 7 realisiert werden. Gleichermaßen wurde die Schweißnahtform durch die Erfassung der Bearbeitungstiefe über den fortwährenden Schweißnahtverlauf konstant gehalten. Neben der geometrischen Invarianz der Schweißnahtform über dem fortwährenden Schweißnahtverlauf wird durch die kontrollierte Einschweißung relativ wenig Prozessenergie zur Realisierung der Schweißnahtverbindung benötigt, insbesondere weniger Prozessenergie im Vergleich zur Herstellung einer Schweißnahtverbindung mit einer taktilen Führung mittels Zusatzdraht.

Eine solche Verbindung nach dem Stand der Technik ist in Fig. 3 gezeigt, wobei ersichtlich die Schweißnaht 25 insgesamt durch den unteren Fügepartner (Blechteil 7) hindurchgeht. Eine Reduktion der eingebrachten Prozessenergie (Wärme) bei der Herstellung der Kehlnaht 9 nach Fig. 2 im Vergleich zur Schweißnaht 25 nach Fig. 3 reduziert gleichermaßen den wärmebedingten Bauteilverzug und somit die Anfälligkeit auf Nahtimperfektionen wie beispielsweise Risse.

## Patentansprüche

1. Verfahren zum Laserstrahlschweißen von mindestens zwei Fügepartnern mittels optischer Nahtführung durchgeführt mittels einer Laserlinie (13) und Lasertriangulation, wobei die Laserlinie (13) unmittelbar vor der Wechselwirkungszone zwischen Bearbeitungslaserstrahl (3) und Fügepartnern (6) auf die Oberfläche projiziert wird, wobei der Bearbeitungslaserstrahl (3) durch eine Scannereinrichtung (4) als Laserstrahlleitvorrichtung mit wenigstens einem gesteuert beweglichen Schwingspiegel (18) eine optisch detektierte Führungskante (10) entsprechend einem Soll-Schweißnahtverlauf abfährt,
**dadurch gekennzeichnet,**
**dass** der optischen Nahtführung durch die Scannereinrichtung (4) eine an die bauteilgeometrischen und/oder prozessualen Bedingungen angepasste hochfrequente Schwingspiegeloszillation mindestens eines Schwingspiegels (18) überlagert wird.

2. Verfahren nach Anspruch 1, **dadurch gekennzeichnet, dass** die hochfrequente Oszillation in einem Frequenzbereich von 0 Hz bis 20 kHz, vorzugsweise in einem Frequenzbereich von 0 Hz bis 5 kHz durchgeführt wird bei einem Vortrieb der Schweißnahtspur im Bereich von 1 mm/sec bis 425 mm/sec.

3. Verfahren nach Anspruch 1 oder 2, **dadurch gekennzeichnet, dass** mehrere Schwingspiegel (18) verwendet sind, die alle eine der Nahtführung überlagerte Oszillation durchführen oder dass alternativ ein oder mehrere Schwingspiegel für die herkömmliche Nahtführung ohne überlagerte Oszillation eingesetzt sind in Kombination mit einem oder mehreren Schwingspiegeln für eine überlagerte Oszillation des Bearbeitungslaserstrahls.

4. Verfahren nach einem der Ansprüche 1 bis 3, **dadurch gekennzeichnet, dass** die optische Kantendetektion für die optische Nahtführung mittels der Laserlinie (13) und Lasertriangulation, gegebenenfalls mittels mehrerer parallel verlaufender Lasertriangulationslinien durchgeführt wird und die Laserlinie (13) unmittelbar vor einer Wechselwirkungszone (5) zwischen Bearbeitungslaserstrahl (3) und Bauteil (6) auf die Oberfläche, insbesondere im Bereich einer Bauteilkante, projiziert wird.

5. Verfahren nach einem der Ansprüche 1 bis 4, **dadurch gekennzeichnet, dass** die der optischen Nahtführung überlagerte Schwingspiegeloszillation so gesteuert wird, dass der in der Wechselwirkungszone (5) gesteuert gelenkte Laserstrahl-Auftreffpunkt zusätzlich und in Kombination mit der herkömmlichen optischen Nahtführung entlang der Bewegung des Soll-Schweißnahtverlaufs mit einer räumlichen Schwingspiegeloszillation durch eine Schwenkbewegung um eine Achse eine überlagerte oszillierende Transversalbewegung ausführt und/oder eine überlagerte oszillierende Taumelbewegung, insbesondere eine oszillierende Kreisbewegung ausführt.

6. Verfahren nach einem der Ansprüche 1 bis 5, **dadurch gekennzeichnet, dass** durch eine zeitliche Modulation der räumlichen Oszillationsbewegung die Aufenthaltszeit des Laserstrahl-Auftreffpunkts entlang seiner Bewegungskurve beeinflusst wird, vorzugsweise dergestalt, dass die Aufenthaltszeit im gesamten Bewegungskurvenverlauf, insbesondere an lateralen Umkehrpunkten, vergleichmäßigt wird.

7. Verfahren nach einem der Ansprüche 1 bis 6, **dadurch gekennzeichnet, dass** der Schweißprozess zusätzlich zur Beeinflussung und Manipulation durch die räumliche Schwingspiegeloszillation, gegebenenfalls in Kombination mit einer zeitlichen Modulation weiter durch eine Einstellung und/oder Modulation der an einer Laserstrahlerzeugungseinrichtung (2) bereitgestellten Laserleistung manipuliert wird.

8. Verfahren nach Anspruch 7, **dadurch gekennzeichnet, dass** die räumliche Schwingspiegetoszillation gegebenenfalls in Verbindung mit einer zeitlichen Modulation mit einer entsprechenden Laserleistungsmodulation korreliert wird.

9. Verfahren nach einem der Ansprüche 1 bis 8, **dadurch gekennzeichnet, dass** bei einer optischen Nahtführung in Kombination mit einer räumlichen Schwingspiegeloszillation und/oder zeitlichen Laserstrahlmodulation und/oder Laserleistungsmodulation zusätzlich mit einem Verfahren zur Bestimmung der Bearbeitungstiefe ein geschlossener Regelkreis zu einer flexiblen Schweißnahtführungsgestaltung gebildet wird.

10. Verfahren nach Anspruch 9, **dadurch gekennzeichnet, dass** die Bearbeitungstiefe durch eine Auswertung der aus der Wechselwirkungszone zurückreflektierten Laserleistung bestimmt wird.

## Claims

1. Method for the laser beam welding of at least two parts to be joined by means of optical seam tracking carried out by means of a laser line (13) and laser triangulation, the laser line (13) being projected onto the surface immediately before the interaction zone between the processing laser beam (3) and the parts (6) to be joined, the processing laser beam (3) travelling along an optically detected tracking edge (10) according to a setpoint weld seam profile by means of a scanner device (4) as a laser beam guide apparatus having at least one tilting mirror (18) mobile in a controlled way,
**characterised in that**
a high-frequency tilting mirror oscillation, adapted to the component geometry conditions and/or process conditions, of at least one tilting mirror (18) is superimposed on the optical seam tracking by the scanner device (4).

2. Method according to claim 1, **characterised in that** the high-frequency oscillation is carried out in a frequency range of from 0 Hz to 20 kHz, preferably in a frequency range of from 0 Hz to 5 kHz, with a forward drive of the weld bead track in the range of from 1 mm/sec to 425 mm/sec.

3. Method according to claim 1 or 2, **characterised in that** a plurality of tilting mirrors (18) are used, all of which carry out an oscillation superimposed on the seam tracking, or **in that** alternatively one or more tilting mirrors are used for conventional seam tracking without a superimposed oscillation in combination with one or more tilting mirrors for a superimposed oscillation of the processing laser beam.

4. Method according to one of claims 1 to 3, **characterised in that** the optical edge detection for the optical tracking is carried out by means of the laser line (13) and laser triangulation, optionally by means of a plurality of laser triangulation lines extending parallel, and the laser line (13) is projected onto the surface, particularly in the region of a component edge, immediately before an interaction zone (5) between the processing laser beam (3) and the component (6).

5. Method according to one of claims 1 to 4, **characterised in that** the tilting mirror oscillation superimposed on the optical seam tracking is controlled in such a way that the laser beam impact point, deflected in a controlled way in the interaction zone (5), additionally executes a superimposed oscillating transverse movement in combination with the conventional optical seam, tracking along the movement of the setpoint weld seam profile with a spatial tilting mirror oscillation by a tilting movement about an axis and/or executes a superimposed oscillating movement, in particular an oscillating circular movement.

6. Method according to one of claims 1 to 5, **characterised in that** the residence time of the laser beam impact point along its movement curve is influenced by a temporal modulation of the spatial oscillation movement, preferably in such a way that the residence time is rendered uniform throughout the movement curve profile, particularly at lateral turning points.

7. Method according to one of claims 1 to 6, **characterised in that** the welding process is manipulated, in addition to the influence and manipulation by the spatial tilting mirror oscillation, optionally in combination with a temporal modulation, further by adjustment and/or modulation of the laser power provided at a laser beam generating device (2).

8. Method according to claim 7, **characterised in that** the spatial tilting mirror oscillation is correlated with a corresponding laser power modulation, optionally in conjunction with a temporal modulation.

9. Method according to one of claims 1 to 8, **characterised in that,** in the case of optical seam tracking in combination with a spatial tilting mirror oscillation and/or temporal laser beam modulation and/or laser power modulation, a closed control loop for flexible weld seam tracking configuration is additionally formed by a method for determining the processing depth.

10. Method according to claim 9, **characterised in that** the processing depth is determined by evaluation of the laser power reflected back from the interaction zone.

## Revendications

1. Procédé de soudage par faisceau laser d'au moins deux éléments de jonction associés au moyen d'un guidage optique de joint de soudure réalisé au moyen d'une ligne laser (13) et triangulation laser, dans lequel la ligne laser (13) est projetée directement devant la zone d'interaction entre le faisceau laser d'usinage (3) et les éléments de jonction associés (6) sur la surface, dans lequel le faisceau laser d'usinage (3) parcourt une arête de guidage détectée optiquement (10) conformément à un tracé de joint de soudure de consigne par un dispositif de balayage (4) comme dispositif de guidage de faisceau laser avec au moins un miroir oscillant (18) mobile de manière commandée,
**caractérisé en ce**
**qu'**une oscillation de miroir oscillant haute fréquence d'au moins un miroir oscillant (18) adaptée aux conditions géométriques du composant et/ou procédurales est superposée au guidage optique de joint de soudure par le dispositif de balayage (4).

2. Procédé selon la revendication 1, **caractérisé en ce que** l'oscillation haute fréquence est réalisée dans une plage de fréquence de 0 Hz à 20 kHz, de préférence dans une plage de fréquence de 0 Hz à 5 kHz, pour un avancement de la trace de joint de soudure dans la plage de 1 mm/s à 425 mm/s.

3. Procédé selon la revendication 1 ou 2, **caractérisé en ce que** plusieurs miroirs oscillants (18) sont utilisés, qui réalisent tous une oscillation superposée au guidage de joint de soudure ou qu'en variante un ou plusieurs miroirs oscillants sont utilisés pour le guidage de joint de soudure traditionnel sans oscillation superposée en combinaison avec un ou plusieurs miroirs oscillants pour une oscillation superposée du faisceau laser d'usinage.

4. Procédé selon l'une quelconque des revendications 1 à 3, **caractérisé en ce que** la détection optique d'arête pour le guidage optique de joint de soudure est réalisée au moyen de la ligne laser (13) et triangulation laser, le cas échéant au moyen de plusieurs lignes de triangulation laser parallèles et la ligne laser (13) est projetée directement devant une zone d'interaction (5) entre le faisceau laser d'usinage (3) et le composant (6) sur la surface, en particulier au niveau d'une arête de composant.

5. Procédé selon l'une quelconque des revendications 1 à 4, **caractérisé en ce que** l'oscillation de miroir oscillant superposée au guidage optique de joint de soudure est commandée de telle sorte que le point d'impact du faisceau laser dirigé de manière commandée dans la zone d'interaction (5) effectue en plus et en combinaison avec le guidage optique de joint de soudure traditionnel le long du mouvement du tracé de joint de soudure de consigne avec une oscillation de miroir oscillant spatiale par un mouvement de pivotement autour d'un axe, un mouvement transversal oscillant superposé et/ou effectue un mouvement de nutation oscillant superposé, en particulier un mouvement circulaire oscillant.

6. Procédé selon l'une quelconque des revendications 1 à 5, **caractérisé en ce que** le temps de séjour du point d'impact du faisceau laser le long de sa courbe de mouvement est influencé par une modulation temporelle du mouvement d'oscillation spatial, de préférence de telle manière que le temps de séjour est uniformisé dans l'ensemble du tracé de courbe de mouvement, en particulier au niveau de points d'inversion latéraux.

7. Procédé selon l'une quelconque des revendications 1 à 6, **caractérisé en ce que** le processus de soudage est manipulé en plus de l'influence et de la manipulation par l'oscillation de miroir oscillant spatiale, le cas échéant en combinaison avec une modulation temporelle en outre par un réglage et/ou une modulation de la puissance du laser mise à disposition au niveau d'un dispositif de génération de faisceau laser (2).

8. Procédé selon la revendication 7, **caractérisé en ce que** l'oscillation de miroir oscillant spatiale le cas échéant en relation avec une modulation temporelle est corrélée avec une modulation correspondante de la puissance du laser.

9. Procédé selon l'une quelconque des revendications 1 à 8, **caractérisé en ce que** lors d'un guidage optique de joint de soudure en combinaison avec une oscillation de miroir oscillant spatiale et/ou modulation temporelle du faisceau laser et/ou modulation de la puissance du laser en plus avec un procédé de détermination de la profondeur d'usinage, un circuit de régulation fermé est réalisé en une conception souple de guidage de joint de soudure.

10. Procédé selon la revendication 9, **caractérisé en ce que** la profondeur d'usinage est déterminée par une évaluation de la puissance du laser réfléchie de la zone d'interaction.
